Europäisches Patentamt

**European Patent Office**

**Office européen des brevets**

(11) Numéro de publication: **0 003 207**

**A1**

(12)

# DEMANDE DE BREVET EUROPEEN

(21) Numéro de dépôt: **79430001.2**

(22) Date de dépôt: **03.01.79**

(51) Int. Cl.²: **C 21 C 5/38**
**B 01 D 53/34**

(30) Priorité: **13.01.78 FR 7801306**

(43) Date de publication de la demande:
**25.07.79 Bulletin 79/15**

(84) Etats contractants désignés:
**BE DE FR IT LU NL SE GB**

(71) Demandeur: **Société Anonyme dite : ENTREPRISE GENERALE DE CHAUFFAGE INDUSTRIEL PILLARD.**
**13, rue Raymond Teissère**
**F-13008 Marseille(FR)**

(72) Inventeur: **Abril, Pierre**
**7, rue de Nossi-bé**
**F-13007 Marseille(FR)**

(74) Mandataire: **Azaïs, Henry et al,**
**c/o CABINET BEAU DE LOMENIE 14, rue Raphael**
**F-13008 Marseille(FR)**

(54) Procédés et dispositifs pour sécher des déchets pulvérulents métalliques, du type boues et paillettes.

(57) L'invention a pour objet des procédés et dispositifs pour sécher des déchets pulvérulents métalliques du type boues et paillettes en supprimant les mauvaises odeurs des buées sortant de séchoir, sans dépense d'énergie.

Une installation selon l'invention comporte un séchoir rotatif (4) qui est alimenté par une trémie (2) en déchets à l'état divisé et qui reçoit des gaz chauds produits par un brûleur (8). Les buées sortant du séchoir sont aspirées par le ventilateur (15), recyclées en partie par les canalisations (16) et (17) et envoyées en partie par la canalisation (20) dans une chambre d'oxydation (19). Les buées épurées sortant de la chambre (19) passent dans un échangeur (22) puis dans un filtre électrostatique (28) avant rejet à l'atmosphère par la cheminée (30).

Une application est la récupération des déchets d'aciérie tels que boues de filtrage des fumées de convertisseurs ou paillettes d'oxydes provenant des forges et des laminoirs.

EP 0 003 207 A1

./. . .

Fig-1

0003207

- 1 -

**Procédés et dispositifs pour sécher des déchets pulvérulents métalliques, du type boues et paillettes.**

L'invention a pour objet des procédés et disposiitfs pour sécher des déchets pulvérulents métalliques, du type boues et paillettes, contenant des oxydes métalliques, de l'eau et des corps gras, notamment les déchets d'une usine sidérurgique ou métallurgique contenant des oxydes de fer, par exemple des boues résultat du dépoussiérage humide des fumées et les paillettes,battitures et croûtes résultant des opérations de laminage, de forgeage, d'étirage,de traitements thermiques etc..., en vue de les récupérer par recyclage dans la fabrication de l'acier, sans provoquer des nuisances telles que les émissions d'odeurs, de fumées poussiéreuses, d'eau résiduaire polluée etc.... et sans nécessiter des dépenses d'énergie plus élevées que dans les procédés de récupération connus.

Le secteur technique de l'invention est en général celui de la récupération des déchets métalliques pulvérulents ou à l'état divisé produits par les usines dans lesquelles on élabore les métaux bruts ou dans les usines métallurgiques où l'on fabrique les demi produits métalliques tels que tôles, profilés laminés, fils. Les procédés et dispositifs selon l'invention s'appliquent notamment à la récupération des déchets métalliques à l'état divisé produits par les aciéries, les usines travaillant l'acier à chaud (laminage, étirage, forgeage, estampage, soudure, traitements thermiques etc...) et les usines de production d'aluminium et d'autres métaux en quantité importante.

L'importance du problème auquel la présente invention apporte

0003207

une solution résulte des faits suivants dans le cas des aciéries:

— les déchets pulvérulents sont produits à raison de plusieurs dizaines de tonnes par heure et par aciérie.

— ces déchets sont en général recyclés directement dans les hauts fourneaux mais  les hauts fourneaux acceptent mal la présence des boues pulvérulentes.

— le recyclage de ces déchets directement dans les convertisseurs est une technique d'autant plus intéressante qu'elle supprime le passage par le haut fourneau et qu'elle réduit la consommation d'oxygène-gaz parce que les oxydes apportent, précisément, une partie de l'oxygène requis.

Malheureusement ce recyclage nécessite le complet séchage préalable des déchets, opération qui jusqu'à présent s'est toujours heurtée à des difficultés, dues principalement à la pollution qu'elle provoque.

Les déchets dont il s'agit contiennent toujours, à côté des oxydes      qui sont le constituant principal, de l'eau et des matières grasses, notamment des huiles et graisses provenant des laminoirs, des ateliers d'étirage etc....

Les installations de séchage connues, comportent généralement un sécheur, par exemple un sécheur horizontal rotatif, à une extrémité duquel on charge les déchets humides qu'on recueille secs à l'autre extrémité. Le séchage est obtenu en mettant les déchets en contact avec des gaz très chauds, par exemple des fumées à 1.000°C ou davantage. Ces gaz se refroidissent et sortent en emportant l'eau évaporée (buées). Toutefois, au cours du passage dans le sécheur, on ne peut empêcher deux phénomènes, d'une part, l'entraînement des poussières fines et, d'autre part, la volatilisation d'une partie au moins des matières grasses.

Poussières et vapeurs grasses sont entraînées avec les buées. Leur rejet direct à l'atmosphère est complètement exclu en raison de la pollution énorme qu'elles provoqueraient (les vapeurs grasses, en effet, sont particulièrement malodorantes, même
à très faible concentration).

Diverses tentatives ont été faites pour résoudre ce problème :

1 - Compte tenu de la grande finesse des particules de poussières, le dépoussiérage à sec n'est possible, avec une efficacité suffisante, qu'au moyen d'un appareil électrostatique. Mais cet appareil est inutilisable car la présence de vapeurs grasses provoque immanquablement l'obstruction du filtre par la formation de dépôts pâteux. De plus, l'accumulation de dépôt grâs crée un risque grave d'explosion. De fait, des accidents de ce genre ont eu lieu.

2 - Le dépoussiérage humide des buées est possible. Des réalisations sont connues. Mais on constate d'une part, la production d'une eau résiduaire grasse dont la purification est délicate et, d'autre part, et surtout, que les fumées dépoussiérées renferment une odeur inacceptable (le lavage des fumées s'avère inopérant à cet égard).

Un objectif de la présente invention est de procurer les moyens propres à assurer l'élimination totale des vapeurs grasses contenues dans les buées de séchage de façon à supprimer radicalement toutes émissions d'odeurs désagréables et à permettre le dépoussiérage efficace et en sécurité desdites buées.

On pourrait éliminer les vapeurs grasses en provoquant leur combustion dans le sécheur. Cette technique obligerait à porter toute la masse des oxydes à une température élevée, par exemple 750°C, ce qui entraînerait une consommation inacceptable de calories supplémentaires pratiquement irrécupérables. On pourrait également brûler les buées à température élevée, par exemple 1000°C. Cette opération résoudrait le problème posé s'il était possible de valoriser les calories dépensées pour porter les buées à cette température. Or, la récupération de ces calories, qui représenteraient un élément important du prix de séchage, n'est en pratique envisageable que sous la forme de vapeur. Mais les installations dont

- 4 -                    0003207

il s'agit ne consomment généralement pas de vapeur.

On pourrait aussi penser à utiliser des chambres d'oxydation à basse température basées sur l'emploi de masses catalytiques. Mais la présence de poussières ne permet pas de recourir à ce procédé.

Selon l'invention, on procède à la destruction des matières grasses contenues dans les buées en les portant à une température moyenne, maintenue pendant une durée déterminée, en présence d'une concentration d'oxygène.

Il est connu que l'oxydation thermique, dite "flamme froide", des matières organiques est régie, par un ensemble de paramètres parmi lesquels on trouve :
- la température;
- la durée de séjour à cette température;
- la concentration en oxygène du milieu réactionnel;
- la présence de composés inhibiteurs ou accélérateurs de l'oxydation;
- la nature chimique des composés organiques à détruire.

L'invention a pour objet des procédés et dispositifs pour sécher des déchets pulvérulents métalliques, du type boues et paillettes contenant des oxydes métalliques de l'eau et des corps gras. On sèche ces déchets, de façon connue, dans un sécheur alimenté en gaz chauds par un brûleur, de sorte que l'on obtient, à la sortie du sécheur, des oxydes secs et des buées chargées d'humidité et de vapeurs grasses, qui sont à une température de l'ordre de 200°C.

Les objectifs de l'invention sont atteints au moyen d'un procédé selon lequel :
- on porte une partie des buées sortant du sécheur à une température comprise entre 450°C et 750°C en les mélangeant à des gaz chauds ayant une teneur minima en oxygène de 1 %.
- et on maintient le mélange à cette température dans une chambre d'oxydation pendant une durée minima comprise entre 10 secondes et 0,5 seconde, de sorte que lesdites vapeurs grasses sont

oxydés.

De préférence, on porte les buées sortant du sécheur à une température de l'ordre de 600°C et on maintient le mélange des buées
et de gaz chauds dans la chambre d'oxydation pendant une durée
minima de l'ordre de cinq secondes.

Avantageusement, on porte les buées à une températ ure comprise
entre 450°C et 750°C en les mélangeant à une parti ~ des gaz chauds
produits par le brûleur qui alimente le sécheur.

L'oxydation des vapeurs grasses produit de la chaleur et une élévation de température des buées de l'ordre de 50°C.

Le temps de séjour du mélange chaud dans la chambre d'oxydation
doit être suffisant pour obtenir une oxydation complète des corps
gras et il croît lorsque la température décroît, passant de 0,5
seconde environ pour une température de 750°C à dix secondes pour
une température de 450°C. Lorsque la température d'oxydation décroît, la consommation de calories décroît également mais en
contrepartie le volume de la chambre d'oxydation croît et les frais
d'investissement également. Il faut trouver le compromis le plus
favorable. Celui-ci se situe à une température de l'ordre de 600°C
et un temps de contact de l'ordre de cinq secondes.

L'oxydation complète des buées à cette température relativement
basse avec une durée de contact assez brève est rendue possible
grâce à la présence dans les buées de très fines particules d'oxyde
de fer qui sont réparties dans tout le volume de buées et qui constituent un catalyseur d'oxydation. Le procédé selon l'invention utilise cette propriété des buées sortant du sécheur pour effectuer
une post-oxydation de celles-ci et pour les débarrasser des produits
malodorants sans entraîner des frais d'investissement trop élevés.

Un second objectif de la présente invention est d'aboutir à la
dépollution décrite ci-avant sans entraîner de dépenses supplémentaires de calories. En effet, les buées sortant du séchage étant à

0003207

200°C environ, leur réchauffement nécessite de leur fournir des calories. Mais il est possible, et c'est la particularité soulignée ici, de récupérer les calories des buées traitées en préchauffant, à leur détriment, l'air qui est nécessaire à la préparation des fumées chaudes qui alimentent le sécheur. Cette récupération ramène les fumées vers 300°C, température favorable à leur dépoussiérage (on peut même pousser plus loin la récupération en produisant par exemple de l'air chaud·utilisable pour le chauffage de locaux). Il doit être souligné ici que la récupération sous forme d'air de combustion préchauffé ne peut équilibrer thermiquement l'ensemble que parce que le procédé selon l'invention opère à température relativement basse. Si, en effet, la température d'oxydation était plus élevée, les buées traitées contiendraient un volant calorifique dont une partie ne serait pas récupérable.

Le procédé selon l'invention se déroule en suivant les étapes ci-après qui, pour partie, sont des opérations connues.

Le séchage lui-même est réalisé dans un sécheur alimenté en gaz chauds constitués par des fumées issues d'une chambre de combustion comportant un ou plusieurs brûleurs eux mêmes alimentés en fluides combustibles et en air préchauffé. Par ailleurs, les oxydes humides sont chargés dans le sécheur. A la sortie du sécheur, on obtient d'une part, les oxydes secs, d'autre part, des buées composées de fumées chaudes introduites qui se sont chargées de la vapeur d'eau formée par le séchage, de poussières entraînées et de vapeurs grasses.

Ces buées sont, par exemple, à 200°C. Elles sont portées entre 450° et 750°C par mélange avec des fumées puis traversent une chambre d'oxydation qui est organisée de façon telle que la durée de séjour atteigne la valeur choisie. Cette dernière qui est déterminée en fonction des paramètres tels que : température d'oxydation, nature des corps organiques, teneur en oxygène est avantageusement comprise entre 0,5 et 10 secondes. On conçoit qu'un compromis doit être recherché, cas par cas, entre les frais d'installation, le prix de la calorie, la nature des oxydes. De préférence, pour réchauffer les buées on utilisera une partie des fumées chaudes produites par le brûleur alimentant le sécheur.

A leur sortie de la chambre d'oxydation, les buées traitées sont partiellement refroidies dans un échangeur préchauffant l'air de combustion (jusqu'à 500° par exemple) puis dépoussiérées dans un filtre électrostatique et, enfin, mises à l'air. La teneur en oxygène des fumées, qui joue un rôle essentiel dans l'efficacité de la chambre d'oxydation est, de préférence gouvernée par un régulateur continu.

Ce schéma général permet un certain nombre de variantes faisant appel, par exemple à un ou plusieurs circuits de recyclage.

L'invention a pour résultat l'épuration des buées produites pendant le séchage de déchets pulvérulents du type boues ou paillettes métalliques.

Cette épuration permet l'oxydation des vapeurs grasses malodorantes et la suppression des mauvaises odeurs ainsi que la rétention efficace des poussières sur un électrofiltre, de sorte que l'on peut rejeter ensuite les fumées sans polluer l'atmosphère.

Ce résultat est atteint sans dépense d'énergie supplémentaire, du fait que l'oxydation a lieu en réchauffant uniquement les buées à une température relative basse de l'ordre de 600° et que les calories nécessaires au réchauffement des buées sont récupérées pour préchauffer l'air de combustion du brûleur qui équipe le sécheur.

La description suivante se réfère aux dessins annexés qui représentent, sans aucun caractère limitatif, un exemple de réalisation d'un dispositif selon l'invention.

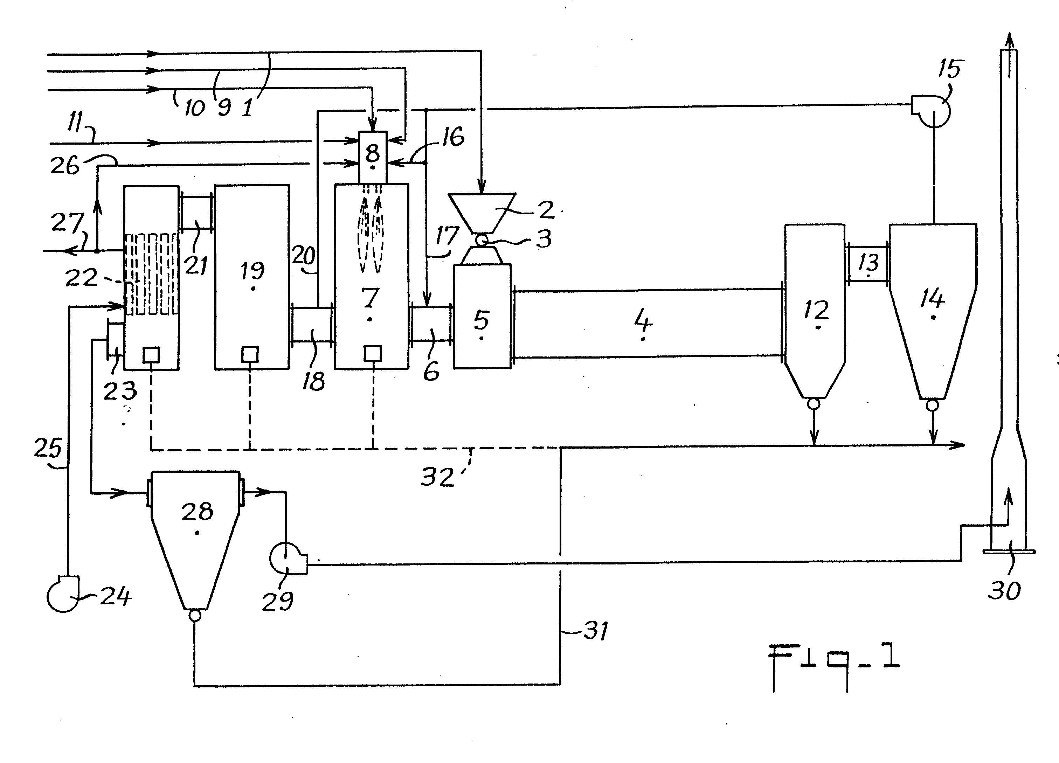

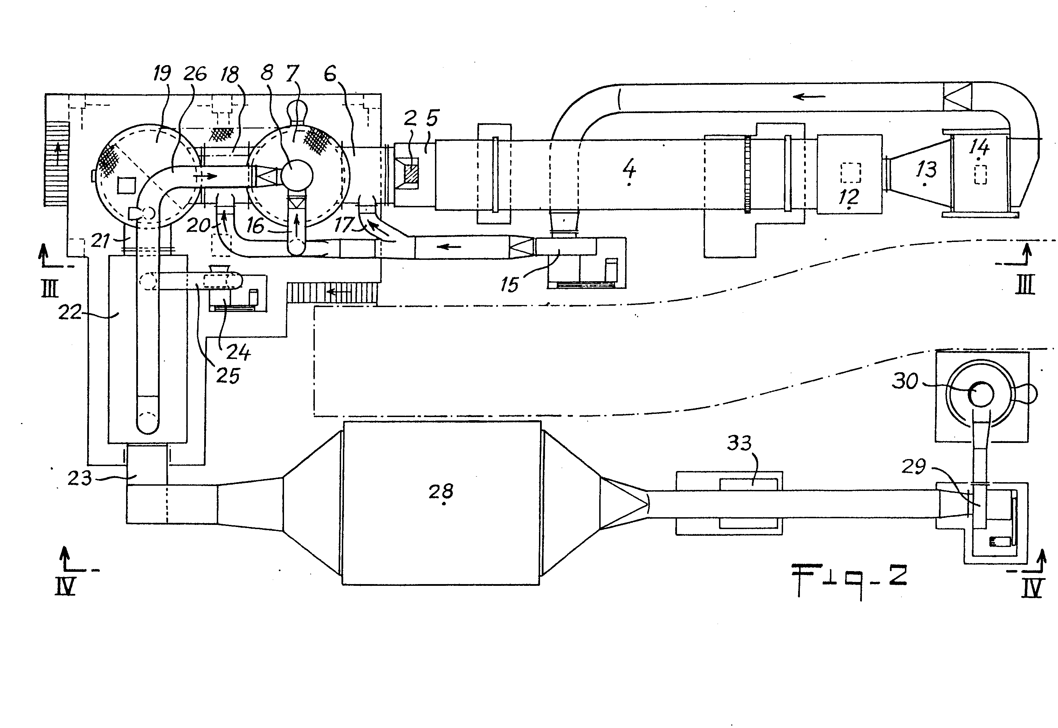

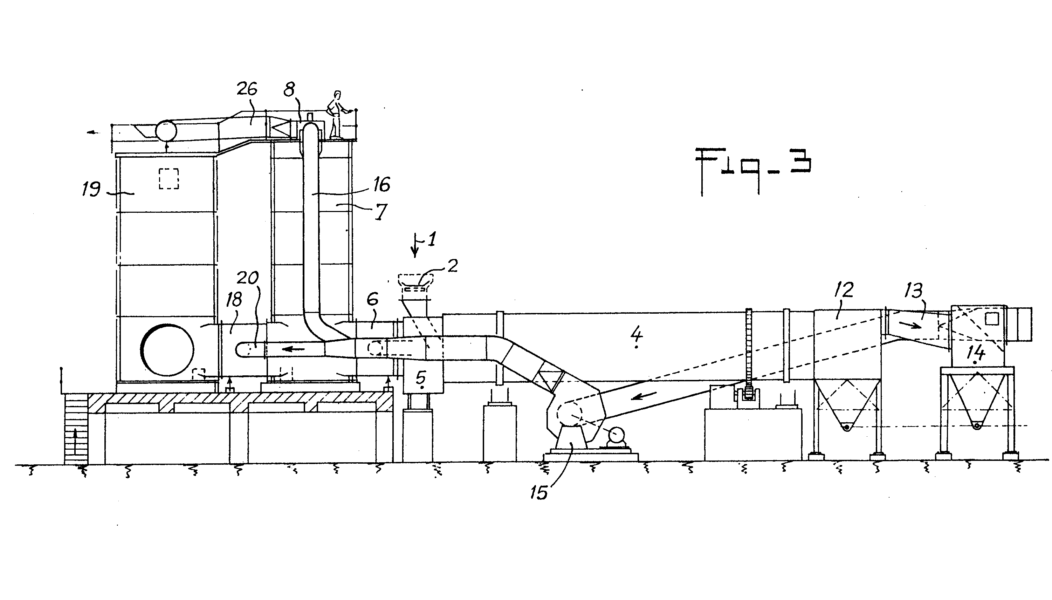

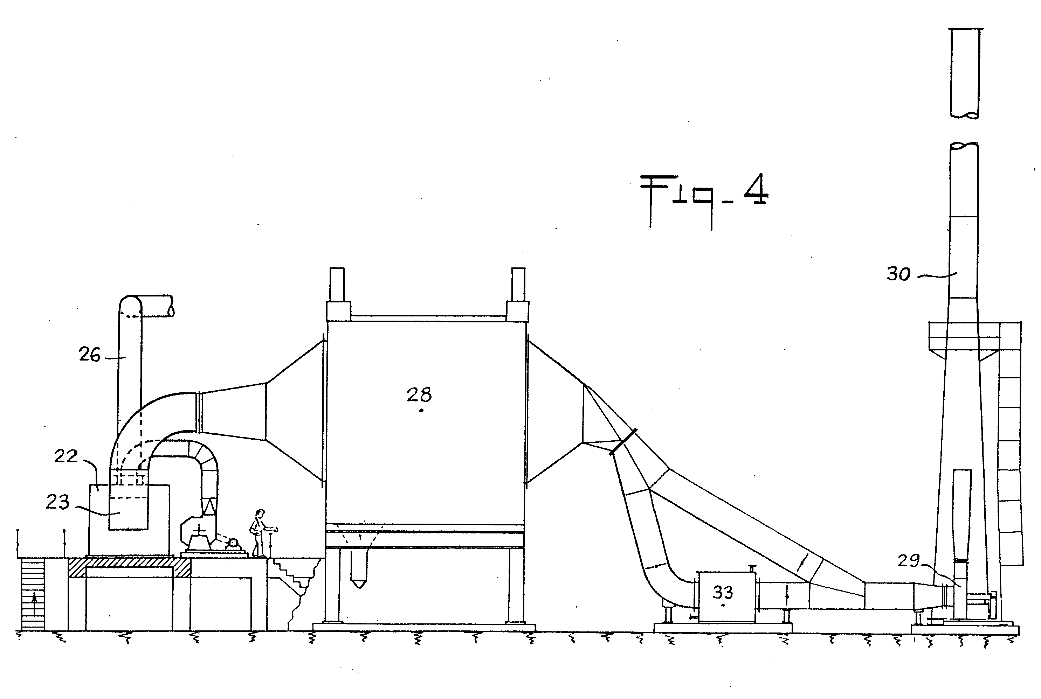

La figure 1 est un schéma d'ensemble d'un dispositif selon l'invention; la figure 2 est une vue en plan d'une installation; les figures 3 et 4 sont des vues en élévation suivant III-III et IV-IV  de la figure  2.

La figure 1 représente un dispositif de séchage des déchets d'une usine sidérurgique qui sont des déchets humides, riches en oxydes de fer, contenant des corps gras. Ces déchets sont constitués, par exemple,de boues de filtrage des fumées des convertisseurs, des paillettes et des croûtes d'oxyde provenant du laminage ou des battitures de forgeage.

La quantité à traiter est par exemple de 40 tonnes/heure contenant environ 34,6 tonnes d'oxydes, 5 tonnes d'eau et 400 Kg de corps gras. Ces déchets sont séchés pour éliminer l'eau et une partie des corps gras et les oxydes secs sont agglomérés en boulets qui sont recyclés dans les convertisseurs.

Les oxydes arrivent par la ligne 1 et tombent dans une trémie 2 qui est équipée d'un dispositif d'extraction continue 3, étanche à l'air. Les oxydes sont séchés dans un sécheur rotatif 4, à axe sensiblement horizontal, ayant une première extrémité de chargement 5 alimentée par une goulotte située au-dessous de l'extracteur 3. L'extrémité de chargement 5 communique par un conduit 6, du type carneau réfractaire, avec une chambre de combustion 7 qui est équipée d'un ou plusieurs brûleurs 8. Les brûleurs 8 sont alimentés en combustible liquide ou gazeux par la ligne 9. La ligne 10 représente le fluide de pulvérisation du combustible, par exemple de l'air comprimé, dans le cas où le combustible est un liquide. La ligne 11 représente une deuxième alimentation en combustible des brûleurs. On peut utiliser par exemple des brûleurs mixtes à gaz et à combustible liquide. Le combustible liquide peut être constitué par exemple par des huiles résiduaires.

Les brûleurs 8 produisent dans la chambre 7 des gaz chauds et le volume de la chambre 7 est calculé en fonction de la température pour assurer un temps de séjour du combustible dans la chambre 7 suffisant pour que la combustion soit complète. Une partie des gaz chauds pénètre par le conduit 6 dans l'extrémité de chargement du sécheur 4 et circule à travers celui-ci. Les gaz chauds rentrent dans le sécheur 4 à une température de l'ordre de 1000°C.

L'extrémité de déchargement du sécheur 4 débouche dans une chambre de dépoussiérage 12 qui communique par un conduit 13 avec un séparateur 14 du type multicyclone.

A la sortie du sécheur 4, on recueille, d'une part, des oxydes secs dans le fond de la chambre 12 et, d'autre part, des gaz appelés buées, qui sont un mélange de fumées provenant de la chambre de combustion 8 qui contiennent de l'air en excés, de vapeur d'eau provenant du séchage des déchets, des vapeurs grasses provenant de la vaporisation des corps gras contenus dans les déchets et des poussières très fines. Les vapeurs grasses contiennent des composés aromatiques nauséabonds et si on les rejette à l'atmosphère, comme c'est le cas actuellement, elles constituent une pollution atmosphérique insupportable, tant par leur odeur que par les poussières qu'elles contiennent. Le seul moyen efficace pour éliminer à sec les poussières très fines contenues dans les buées serait un filtrage électrostatique, mais celui-ci n'est pas possible par suite du colmatage du filtre par les vésicules de goudrons et des risques d'explosion.

L'installation de séchage décrite ci-dessus est connue. L'objectif de l'invention est d'adjoindre à celle-ci un dispositif de traitement des buées en vue de les épurer sans entraîner une consommation de calories supplémentaire.

Les buées sortant du séparateur 14 à une température de l'ordre de 200°C sont reprises par un ventilateur.

Une partie de ces buées est recyclée par la ligne 16 dans la chambre de combustion 7. Ce recyclage produit une dilution des gaz chauds et permet de réduire la température dans la chambre de combustion afin de protéger les revêtements réfractaires de celle-ci.

Une autre partie des buées est recyclée par la ligne 17 dans le conduit 6 où elle se mélange aux gaz chauds entrant dans le sécheur 4. Ce deuxième recyclage permet d'augmenter la dilution des gaz chauds entrant dans le sécheur pour amener leur température à environ 1000°C sans trop réduire la température dans la chambre de combustion 7. Les vapeurs grasses contenues dans les buées recyclées par les lignes 16 et 17 sont brûlées à la température de 1000°.

La chambre de combustion à haute température 7 est reliée par un conduit 18, du type carneau réfractaire, à la base d'une chambre verticale 19 qui est une chambre d'oxydation à température moyenne appelée chambre de post-oxydation des buées.

Une partie des buées est envoyée par la ligne 20 vers le conduit 18 où elle se mélange à des gaz à 1000°C provenant de la chambre 7.

Le volume de la chambre 19 est égal à un nombre de fois le débit total de buées et de gaz par seconde, de telle sorte que le mélange de buées et de gaz chaud contenant de l'air en excés séjourne dans la chambre pendant un nombre de secondes égal à ce nombre de fois. Ce nombre de secondes doit être suffisant pour que l'oxydation des vapeurs grasses soit complète. La durée de séjour minima varie, inversement à la température, entre 0,5 seconde pour une température de 750°C et 10 secondes pour une température de 450°C. Elle est de 5 secondes pour une température de 600°C.

La chambre de post-oxydation 19 comporte, à proximité de son sommet, un conduit 21 d'évacuation des buées oxydées. Ce conduit est connecté sur l'entrée du circuit de fluide chauffant d'un échangeur gaz-gaz 22. Le repère 23 désigne la sortie des buées refroidies.

L'échangeur 22 sert à réchauffer de l'air qui est envoyé à l'échangeur par un ventilateur 24 et par la canalisation 25. L'air chaud sortant par la canalisation 26 est envoyé au brûleur 8 dont il constitue l'air de combustion. Cet air de combustion préchauffé est à une température de l'ordre de 500°C, donc
à une température supérieure à celle que l'on rencontre
dans les brûleurs habituels à air préchauffé qui est de l'ordre
de 300°. Ceci nécessite une adaptation du brûleur dont le circuit d'air doit être composé de matériaux résistant à une température de 500°. L'air préchauffé 26 contient de l'air en excés
de la quantité nécessaire pour la combustion, de telle sorte
qu'il reste dans les fumées rentrant dans la chambre d'oxydation 19 par le collecteur 18, de l'oxygène qui oxyde les vapeurs
grasses.

Le préchauffage à 500°C de l'air de combustion et de l'air en
excés suffit à abaisser la température des buées à une température de l'ordre de 250°C, de sorte que si l'on tient compte que l'oxydation des buées dans la chambre 19 entraîne une élévation de
température de l'ordre de 50°C, la perte de calories par les
buées est la même que dans les installations comportant un rejet
des buées à l'atmosphère à la sortie du sécheur 4, dont les buées
sortent à une température de l'ordre de 200°C.

L'oxydation des buées par le procédé selon l'invention permet
donc de supprimer les mauvaises odeurs des buées sans entraîner
aucune dépense de calories supplémentaire, en récupérant dans
l'installation elle-même les calories qui sont nécessaires à
l'élévation de température des buées pour pouvoir les oxyder. Ce
résultat est rendu possible du fait que les buées sont oxydées à
une température relativement basse, de l'ordre de 600°C, de
telle sorte que la quantité de calories nécessaire pour élever
leur température de 200°C à 600°C reste relativement faible et
compatible avec la quantité de calories nécessaire au préchauffage
de l'air de combustion.

On a représenté sur la figure 1 un départ 27 d'air chaud supplémentaire qui peut être utilisé par exemple pour chauffer des
locaux ce qui permet alors de récupérer une plus grande quantité
de calories et d'abaisser la température des buées sortant de
l'échangeur 22 à une température inférieure à 250°.

Bien entendu, on peut placer plusieurs échangeurs en série et utiliser également les calories contenues dans les buées pour chauffer de l'eau ou tout autre fluide caloporteur liquide ou gazeux, ce qui permet d'améliorer la récupération de calories.

La sortie 23 de l'échangeur 22 est connectée sur un électrofiltre 28 qui est par exemple un filtre électrostatique à double champ permettant d'éliminer efficacement les poussières contenues dans les buées. Cette filtration à sec est rendue possible du fait que les buées ont été débarrassées des vapeurs grasses et du fait que la température des buées a été abaissée au-dessous de 340°C qui est la température maxima admissible pour le passage dans l'électrofiltre.

L'oxydation des buées et le refroidissement ultérieur de celles-ci ont une double fonction, d'une part, d'éliminer les vapeurs grasses sans dépenser de calories et, d'autre part, de permettre l'élimination ultérieure des poussières par filtration à sec dans un électrofiltre. A la sortie de l'électrofiltre 28, les buées contiennent une quantité de poussières inférieures à 75 mg par mètre cube. Un ventilateur 29 aspire les buées sortant de l'électrofiltre et les refoule vers une cheminée 30 de rejet à l'atmosphère.

La ligne 31 représente l'extraction des oxydes secs récupérés dans la chambre de sortie 12, dans le séparateur 14 et dans le filtre électrostatique 28. La ligne en pointillés 32 représente les récupérations obtenues lors des ramonages périodiques des chambres 7 et 19 et de l'échangeur 22.

Une installation selon la figure 1 comporte des dispositifs de régulation qui assurent un fonctionnement automatique et notamment la régulation de la teneur en oxygène libre des fumées. Cette régulation qui s'applique aux fumées rejetées à l'atmosphère, comporte un appareil de mesure de la teneur en oxygène des fumées sortant du filtre 28, lequel appareil agit automatiquement sur un registre placé sur la canalisation 26 amenant l'air de combustion au brûleur afin de maintenir un excés d'air constant dans les fumées et une teneur minima en oxygène supérieure à 1%, de préférence entre 2% et 4%.

Les figures 2, 3 et 4 sont des vues en plan et en élévation d'une installation selon l'invention. Les parties homologues sont représentées sur le schéma 1 et sur les figures 2, 3 et 4 par les mêmes repères.

L'installation représentée sur les figures 2 et 4 diffère de celle de la figure 1 uniquement par le fait qu'elle comporte un échangeur supplémentaire 33 à travers lequel passe une partie des fumées dépoussiérées sortant du filtre 28. Cet échangeur sert à réchauffer de l'air qui est utilisé pour chauffer des locaux.

On décrit à titre d'exemple le séchage des déchets à l'état divisé provenant d'une usine sidérurgique. Ce choix n'entraîne aucune limitation de l'invention et il est bien précisé que les procédés et dispositifs qui viennent d'être décrits s'appliquent également au traitement des buées provenant du séchage de n'importe quel type de déchets métalliques par exemple des déchets d'une usine de fabrication d'aluminium ou de demi produits en aluminium

Revendication de brevet

1. Procédé pour sécher des déchets pulvérulents métalliques, du type boues et paillettes, contenant des oxydes métalliques, de l'eau et des corps gras, selon lequel on sèche lesdits déchets dans un sécheur (4) alimenté en gaz chauds par un brûleur (8) et on obtient à la sortie dudit sécheur des oxydes secs et des buées chargées d'humidité et de vapeurs grasses à une température de l'ordre de 200°C, caractérisé en ce que :

- on porte une partie des buées sortant du sécheur à une température comprise entre 450°C et 750°C en les mélangeant à des gaz chauds ayant une teneur minima en oxygène de 1%;

- et on maintient ledit mélange à cette température dans une chambre d'oxydation (19) pendant une durée minima comprise entre 10 secondes et 0,5 seconde, de sorte que lesdites vapeurs grasses sont oxydées.

2. Procédé selon la revendication 1, caractérisé en ce qu'on porte lesdites buées à une température de l'ordre de 600°C et on maintient le mélange de buées et de gaz chauds dans la chambre d'oxydation (19) pendant une durée minima de l'ordre de 5 secondes.

3. Procédé selon l'une quelconque des revendications 1 et 2, caractérisé en ce qu'on porte lesdites buées à une température comprise entre 450°C et 750°C en les mélangeant à une partie des gaz chauds produits par ledit brûleur (8).

4. Procédé selon l'une quelconque des revendications 1 à 3, caractérisé en ce que l'on maintient la teneur en oxygène du mélange de buées et de gaz chauds sortant de la chambre d'oxydation (19) à une teneur comprise entre 2 % et 4 %.

5. Procédé selon l'une quelconque des revendications 1 à 4, caractérisé en ce que, après que lesdites buées ont été oxydées dans ladite chambre d'oxydation (19), on les fait passer dans un échangeur (22) pour chauffer un fluide, notamment pour préchauffer l'air de combustion dudit brûleur (8), de telle sorte que l'on refroidit lesdites buées à une température voisine ou inférieure à leur température à la sortie du sécheur (4) et que l'on récupère une partie des calories qu'elles contenaient dans l'installation.

6. Procédé selon la revendication 5, caractérisé en ce que l'on fait passer les buées refroidies sortant dudit échangeur (22) à travers un électrofiltre (28) afin de les débarrasser des poussières qu'elles contiennent puis on les rejette à l'atmosphère.

7. Procédé selon l'une quelconque des revendications 1 à 6, caractérisé en ce que l'on injecte une autre partie des buées sortant du sécheur (4) dans la chambre de combustion (7) contenant ledit brûleur (7).

8. Dispositif pour sécher les déchets d'une usine sidérurgique du type boues ou paillettes contenant des oxydes de fer, de l'eau et des corps gras, comportant :
   - un sécheur rotatif (4) ayant un axe sensiblement horizontal, une extrémité de chargement (5) et une extrémité de déchargement;
   - une trémie (2) et un dispositif (3) d'alimentation continue dudit sécheur (4) en déchets humides, situés à l'extrémité (5) du chargement du sécheur;
   - un ou plusieurs brûleurs (8) situés dans une chambre de combustion (7) qui communique avec ladite extrémité (5) de chargement du sécheur (4);
   - une chambre (12) de sortie des oxydes secs située à l'extrémité de déchargement du sécheur;
   - et des moyens pour collecter les buées chargées d'humidité et de vapeurs grasses situés à l'extrémité de déchargement du sécheur (4),
lequel dispositif est caractérisé en ce qu'il comporte, en outre, une chambre verticale (19) d'oxydation des buées, laquelle chambre comporte, à sa base, un conduit mélangeur (18) qui communique d'une part, avec ladite chambre de combustion (19) et, d'autre part, avec lesdits moyens (20) pour collecter les buées à la sortie dudit sécheur et ladite chambre (19) comporte, à son sommet, un conduit (21) d'évacuation du mélange chaud et le volume de ladite chambre (19) est tel que le mélange de buées et de fumées séjourne dans ladite chambre (14) pendant une durée comprise entre 0,5 seconde et 10 secondes.

9. Dispositif selon la revendication 8, caractérisé en ce que lesdits brûleurs (18) comportent une canalisation (16) de recyclage d'une fraction des buées sortant dudit sécheur (4).

10. Dispositif selon l'une quelconque des revendications 8 et 9, caractérisé en ce que ladite chambre de combustion (7) est réunie à ladite extrémité (5) de chargement du sécheur par un conduit mélangeur (6) qui comporte une canalisation (17) de recyclage d'une fraction des buées sortant dudit sécheur (4).

11. Dispositif selon l'une quelconque des revendications 8 à 10, caractérisé en ce qu'il comporte, en outre, un échangeur gaz-gaz (22) dont l'entrée du circuit de fluide chauffant est connectée au conduit (21) d'évacuation de ladite chambre d'oxydation (19) et qui chauffe un fluide, notamment l'air de combustion desdits brûleurs (8).

12. Dispositif selon la revendication 11 pour la mise en oeuvre du procédé selon la revendication 6, caractérisé en ce qu'il comporte un électrofiltre (28) dont l'entrée est connectée à la sortie (23) du circuit de fluide chauffant dudit échangeur (22) et dont la sortie est connectée sur une cheminée (30) d'évacuation des buées épurées.

Fig-1

Fig-2

0003207

Fig-3

Fig-4

**Office européen des brevets**

# RAPPORT DE RECHERCHE EUROPEENNE

Numéro de la demande

EP 79 43 0001

| | DOCUMENTS CONSIDERES COMME PERTINENTS | | CLASSEMENT DE LA DEMANDE (Int. Cl.²) |
|---|---|---|---|
| Categorie | Citation du document avec indication, en cas de besoin, des parties pertinentes | Revendication concernée | |
| A | US - A - 3 820 510 (P. VAYSSIERE) | | C 21 C 5/38 B 01 D 53/34 |
| A | LU - A - 38 236 (HEURTEY & CIE) | | |
| | ---- | | |

**DOMAINES TECHNIQUES RECHERCHES (Int. Cl.²)**

C 21 C 5/00
B 01 D 53/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 05-04-1979 | BOGAERTS |

OEB Form 1503.1 06.78